# EUROPEAN PATENT APPLICATION

(11) **EP 4 844 995 A1**
(43) Date of publication of application: **25.11.2026**
(21) Application number: 25742144.6
(22) Date of filing: 15.01.2025
(51) Int. Cl.: H02K 7/08, H02K 5/16, H02K 5/24, G01S 7/481, G01S 17/931

(54) **LIDAR DRIVING DEVICE AND LIDAR DEVICE**

(30) Priority: 15.01.2024 KR 20240005988
(71) Applicant: LG Innotek Co., Ltd., Seoul 07796 (KR)
(72) Inventor: PARK, Young Dae, Seoul 07796 (KR); YU, Hyun Soo, Seoul 07796 (KR); CHOI, Jin Myung, Seoul 07796 (KR)
(74) Representative: Plasseraud IP
(86) International application number: PCT/KR2025/000894
(87) International publication number: WO 2025/155091

(57) **Abstract**

A LiDAR device disclosed in an embodiment may comprise: a stator housing: a central shaft coupled to the central portion of the stator housing; a rotor housing; a motor coupled between the stator housing and the rotor housing; a first substrate arranged in the stator housing and electrically connected to the central shaft; a second substrate arranged on the rotor housing; and a contact plate for electrically connecting the second substrate and the central shaft.

## Description

### Technical field

The present invention relates to a LiDAR driving device and a LiDAR device. The present invention relates to a LiDAR device having a rotatable sensor unit and a fixed stator unit.

### Background Art

Autonomous vehicles (AVs) use a plurality of sensors for situation awareness. Sensors included in a self-driving system (SDS) of an autonomous vehicle may include one or more of a camera, a Light Detection and Ranging (LiDAR) device, an inertial measurement unit (IMU), and the like. Sensors such as cameras and LiDAR are used to capture and analyze scenes surrounding a driving vehicle. The captured scenes are then used to detect objects including static objects such as fixed structures and dynamic objects such as pedestrians and other vehicles. In addition, data collected from the sensors may also be used to detect conditions such as road markings, lane curvature, traffic lights, traffic signs, and the like. In addition, scene representations such as a three-dimensional point cloud acquired from the LiDAR of the driving vehicle may be combined with one or more images acquired from a camera in order to obtain additional insight into a scene or situation surrounding the driving vehicle.

In addition, a LiDAR transceiver may include a transmitter configured to transmit light in ultraviolet (UV), visible light, and infrared spectrum regions and one or more photodetectors configured to convert electromagnetic radiation into electrical signals. In order to provide high-fidelity object detection and tracking, optical sensors such as LiDAR require rigidly fixed optical components and sufficient space for one or more transceiver assemblies, processing and driver circuits, cooling elements, cleaning elements, wiring, and motor assemblies. LiDAR may also include transceiver components rigidly fixed relative to one another in order to withstand automotive-grade vibration, high-speed rotation of a mechanical LiDAR assembly, and to address balance and weight considerations. In addition, LiDAR requires sufficient accommodation packaging and aesthetic considerations should also be taken into account.

### Summary of Invention

### Technical Problem

Embodiments of the present invention may provide a LiDAR driving device and a LiDAR device capable of reducing electrical contact resistance between an internal configuration of a rotor housing rotating on a stator housing and the stator housing.

Embodiments of the present invention may provide a LiDAR driving device and a LiDAR device capable of reducing electrical contact resistance between a center shaft and a member rotating about the center shaft.

Embodiments of the present invention may provide a LiDAR driving device and a LiDAR device capable of reducing electrical contact resistance between a substrate and a center shaft by disposing a contact plate between the center shaft and a rotating substrate.

### Solution to Problem

An intermediate beam assembly according to an embodiment of the present invention for achieving the above object may include: a stator housing; a center shaft coupled to a central portion of the stator housing; a rotor housing; a motor coupled between the stator housing and the rotor housing; a first substrate disposed within the stator housing and electrically connected to the center shaft; a second substrate disposed on the rotor housing; and a contact plate electrically connecting the second substrate and the center shaft.

According to the embodiment of the invention, the second substrate may include a coupling hole at a center thereof, the contact plate includes: a fixed portion fixed around the coupling hole of the second substrate; and a contact portion which has an elastic piece bent toward the center shaft and a contact piece extending from the elastic piece onto the center shaft.

According to the embodiment of the invention, the center shaft may include a conductive contact protrusion contacting the contact piece.

According to the embodiment of the invention, the contact protrusion may protrude convexly in a hemispherical shape from an upper center of the center shaft.

According to the embodiment of the invention, the contact protrusion has a ball shape and is seated on a concave recess formed on an upper portion of the center shaft.

According to the embodiment of the invention, the center shaft includes a concave recess at an upper portion thereof, the contact protrusion includes a pin-shaped lower portion and a hemispherical upper portion, the pin-shaped lower portion of the contact protrusion is inserted into the recess, and the hemispherical upper portion of the contact protrusion contacts the contact piece.

According to the embodiment of the invention, the contact piece has a convex groove or an insertion hole smaller than a diameter of the contact protrusion, and contacts the upper portion of the contact protrusion.

According to the embodiment of the invention, the center shaft includes a protrusion guide portion coupled with an elastic spring in an upper recess thereof, and wherein the contact protrusion is coupled within the protrusion guide portion and contacts the contact piece.

According to the embodiment of the invention, The LiDAR driving device may further comprises: a first conductive layer around the coupling hole and around a lower surface of the second substrate; and a second conductive layer on a surface of the contact plate.

According to the embodiment of the invention, a diameter of the coupling hole may be smaller than a diameter of the center shaft and smaller than a diameter of the contact plate.

According to the embodiment of the invention, the LiDAR device may further comprise a plurality of bearing members respectively disposed in a region between the stator housing and the rotor housing and a region between the rotor housing and the center shaft.

A LiDAR device according to the embodiment of the present invention may comprise: a transceiver configured to transmit and receive a laser beam; a stator housing supporting the transceiver; a center shaft coupled to a central portion of the stator housing; a rotor housing rotating together with the transceiver about the center shaft; a motor coupled between the stator housing and the rotor housing; a first bearing member coupled between the stator housing and the rotor housing; a second bearing member coupled between the center shaft and the rotor housing; a first substrate disposed within the stator housing and electrically connected to the center shaft; a second substrate disposed on the rotor housing and electrically connected to the transceiver; and a contact plate fixed to the second substrate and electrically connecting the second substrate and the center shaft, a contact resistance between the first substrate and the second substrate may be 500 ohms or less.

According to the embodiment of the invention, the second substrate may include a coupling hole at a center thereof, the contact plate may include a fixed portion fixed around the coupling hole of the second substrate, and a contact portion having an elastic piece bent toward the center shaft and a contact piece extending from the elastic piece onto the center shaft, and the center shaft may include a conductive contact protrusion contacting the contact piece.

According to the embodiment of the invention, wherein the contact protrusion protrudes convexly in a hemispherical shape from an upper center of the center shaft.

According to the embodiment of the invention, the contact protrusion may have a ball shape and be seated on a concave recess formed on an upper portion of the center shaft.

According to the embodiment of the invention, the center shaft may include a concave recess at an upper portion thereof, the contact protrusion may include a pin-shaped lower portion and a hemispherical upper portion, the pin-shaped lower portion of the contact protrusion may be inserted into the recess, the hemispherical upper portion of the contact protrusion may contact the contact piece, and the contact piece may have a convex groove or an insertion hole smaller than a diameter of the contact protrusion and may contact the upper portion of the contact protrusion.

According to the embodiment of the invention, the center shaft may include a protrusion guide portion coupled with an elastic spring in an upper recess thereof, and the contact protrusion may be coupled within the protrusion guide portion and contact the contact piece.

### Advantageous Effects of Invention

According to embodiments of the present invention, the lifespan of an internal bearing member may be improved by bringing a center shaft within a stator housing into contact with a substrate on a rotor housing through a contact plate. In addition, the contact resistance between the center shaft and the substrate may be maintained at 500 ohms or less by providing the contact plate with an elastic piece, thereby preventing deterioration in energization performance. In addition, errors in wireless data communication between a rotating part and a fixed part of the LiDAR device may be reduced.

According to embodiments of the present invention, noise and wear caused by contact may be reduced by bringing a center shaft within a stator housing into contact with a substrate on a rotor housing through a contact plate and applying a lubricant onto a curved surface portion contacted by the contact plate.

The present invention may prevent deterioration in performance of a LiDAR device having a LiDAR driving device, improve operational reliability, and extend lifespan. In addition, deterioration in reliability of a movable object such as a vehicle having the LiDAR device may be prevented.

### Brief Description of Drawings

FIG. 1 is a perspective view of a vehicle having a LiDAR system according to an embodiment of the present invention.
FIG. 2 is an example of a block configuration diagram of a vehicle system having the LiDAR system of FIG. 1.
FIG. 3 is a perspective view of a LiDAR device according to an embodiment of the present invention.
FIG. 4 is a perspective view of the LiDAR device of FIG. 3 viewed from another direction.
FIG. 5 is an example of a side cross-sectional view of the LiDAR device of FIG. 3.
FIG. 6 is an example of a perspective view of a rotor housing, a contact plate, and a rotating substrate in the LiDAR driving device of FIG. 5.
FIG. 7 is a coupled side cross-sectional view of the LiDAR driving device of FIG. 6.
FIG. 8 is an exploded perspective view of the center shaft, the contact plate, and the rotating substrate of FIG. 5.
FIGS. 9A and 9B are an enlarged view and a side cross-sectional view of the contact plate of FIG. 8.
FIG. 10 is a perspective view illustrating a rear surface of the rotating substrate of FIG. 8.
FIG. 11 is an enlarged view for explaining a relationship among the rotating substrate, the contact plate, and the center shaft of FIG. 7.
FIG. 12 illustrates a first modified example of a member contacting the contact plate of FIG. 11.
FIG. 13 illustrates a second modified example of a member contacting the contact plate of FIG. 11.
FIGS. 14A and 14B illustrate shapes of the contact plate and a contact protrusion of FIG. 13.
FIG. 15 illustrates a third modified example of a member contacting the contact plate of FIG. 11.
FIGS. 16A and 16B illustrate modifications of the contact plate of FIG. 11 and other examples of contact members.
FIG. 17 illustrates another example of a modification of the contact plate of FIG. 11 and a contact member.

### Description of Embodiments

Hereinafter, embodiments will be described in detail with reference to the accompanying drawings in which like reference numerals refer to like elements. However, the present invention may be embodied in many different forms and is not limited to the embodiments illustrated herein. Rather, these embodiments are provided as examples so that this disclosure will be thorough and complete, and will fully convey the features and functions of the present invention to those skilled in the art. Accordingly, processes, elements, and techniques that are not necessary for a person having ordinary skill in the art to fully understand the features and functions of the present invention may not be described. Unless otherwise specifically stated, like reference numerals denote like elements throughout the accompanying drawings and written description, and thus descriptions thereof will not be repeated.

LiDAR system may be referred to as a depth detection system, a laser ranging system, a laser radar system, a LIDAR system, or a laser/light detection and ranging (LADAR) system. LiDAR is a type of distance measurement sensor characterized by a long sensing distance, high resolution, and low environmental interference. LiDAR has been widely applied in intelligent robots, unmanned aerial vehicles, autonomous driving, and self-driving fields. An operating principle of LiDAR is to estimate a distance based on a roundtrip time of electromagnetic waves between a source and a target (for example, time of flight or delay time). A LiDAR system measures a distance (for example, depth) to an object by emitting an optical pulse (for example, a laser pulse) toward the object and measuring a time taken for the optical pulse to be reflected from the object and detected by a sensor of the LiDAR system.

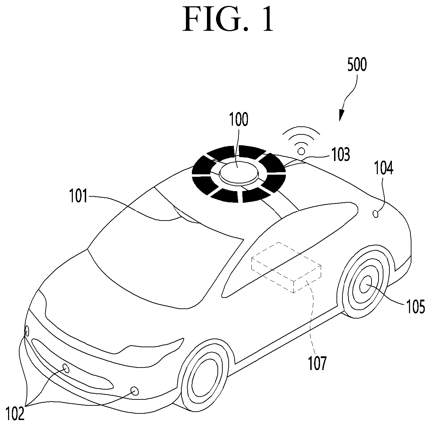

The above-described aspects and features of embodiments of the present invention will be described in more detail with reference to the drawings. FIG. 1 is a perspective view of a vehicle having a LiDAR system according to an embodiment of the present invention.

Referring to FIG. 1, a movable object such as a vehicle 500 may include a LiDAR system 100, a camera unit 101, vehicle recognition sensors 102 and 104, a GPS (Global Positioning System) sensor 103, a vehicle control module 107, and an ultrasonic sensor 105. The LiDAR system 100 is a device having a rotating image unit or sensor unit, is coupled to a portion of the vehicle 500, rotates 360 degrees, senses a distance between the vehicle and an object (a static object or a dynamic object), surrounding environments and shapes, and controls driving using measured data. Surrounding objects or environments of the vehicle may be collected and analyzed through a three-dimensional point cloud using such sensing technology, and sensing data providing information on objects located within an appropriate proximity range may be generated. The LiDAR system 100 may communicate with the vehicle control module 107 and transmit/receive information according to driving of the vehicle. The vehicle control module 107 may communicate with various systems or sensors within the vehicle and perform various controls. The vehicle control module 107 is a device for controlling and monitoring various systems of the vehicle and may include a control device such as an electronic control unit (ECU). The vehicle control module 107 may communicate with an external mobile device and may be electrically connected to a detachable storage device.

The camera unit 101 may be mounted singly or in plurality inside and/or outside the vehicle, and may photograph front images and/or rear images of the traveling vehicle and provide or store the images through a display device (not shown). The photographed image data may optionally include audio data. In another example, the camera unit 101 may be mounted on the front, rear, each corner, or each side of the vehicle 500 to photograph surrounding images of the vehicle and provide the images through a display device (not shown). The vehicle control module 107 or another processor may identify traffic lights, vehicles, pedestrians, and the like based on data photographed by the camera unit 101 and provide acquired information to a driver. The camera unit 101 may be used as a driving assistance device.

A front radar 120 is installed in plurality at a front portion of the vehicle 500 and detect a distance between the vehicle 500 and a front object. A plurality of rear radars 104 are installed at a rear portion of the vehicle 500 and detect a distance between the vehicle 500 and a rear object. When object information sensed through the radars 102 and 104 is present, surrounding objects or obstacles are detected and notified to a driver through alarms or warning messages. The GPS sensor 103 may receive signals from satellites and provide the signals to devices such as the vehicle control module 107, the LiDAR system 100, and the camera unit 101, and the devices may provide or calculate information such as a position, speed, and time of the vehicle based on GPS position signals. The ultrasonic sensor 105 may sense a distance from nearby vehicles or obstacles to provide convenience for safely parking the vehicle in a parking space. In addition, the ultrasonic sensor 105 may prevent accidents that may occur during driving. The ultrasonic sensor 105 may be installed at a rear portion, side portion, or wheel portion of the vehicle.

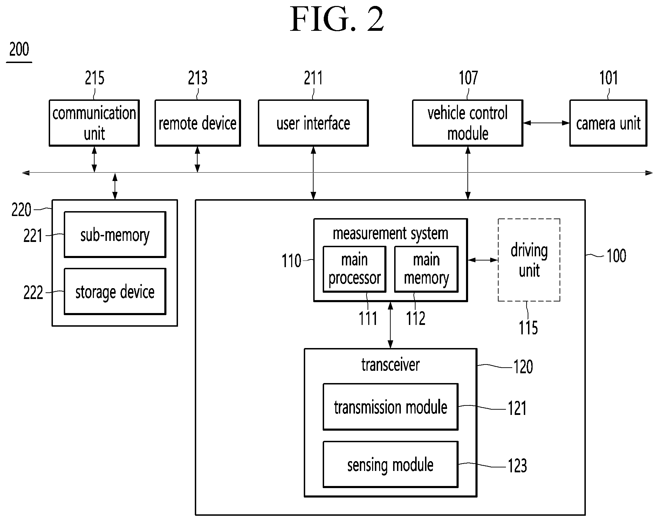

As shown in FIG. 2, a vehicle system 200 having the LiDAR system 100 and the vehicle control module 107 receives an input from a user or driver or provides information to the user or driver through a user interface 211. The user interface 211 may include a display device, a touch panel, buttons, voice recognition, wired or wireless input devices, and may be connected through wired or wireless communication to enable communication between the driver and various devices. The vehicle system 200 communicates with a remote device 213, and the remote device 213 may remotely communicate with a user or external entity or receive an external control signal. A communication unit 215 may support wired or wireless communication and may be, for example, a wired or wireless module. The storage unit 220 may include one or more sub-memories 221 therein. In addition, the storage unit 220 may include a portable or detachable storage device 222. The LiDAR system 100 may communicate with the user interface 211 and the camera unit 101.

The LiDAR system 100 includes a driving unit 115 such as a motor, and the driving unit 115 may rotate part or all of the LiDAR system 100 by 360 degrees according to a control signal. The driving unit 115 includes a fixed portion (for example, a stator) fixed to a movable object such as a vehicle and a rotating portion (for example, a rotor) rotating together with a sensor device, communicates with an internal configuration of the LiDAR system 100, for example, a measurement system 110, and enables axial rotation of the LiDAR system 100. The LiDAR system 100 may include the measurement system 110 and at least one transceiver 120. The driving unit 115 may be coupled to allow the measurement system 110 and the transceiver 120 to rotate and may transmit driving force. The transceiver 120 is a device for transmitting and receiving a laser beam for recognizing an object.

The measurement system 110 may include a main processor 111 and a main memory 112, and the main processor 111 may be implemented as a general-purpose processor, an ASIC (Application Specific Integrated Circuit), one or more FPGA (Field Programmable Gate Array), a group of processing components, or another suitable electronic processing component. The main memory (for example, memory, a memory unit, a storage device, and the like) 112 may include one or more devices (for example, RAM, ROM, flash memory, hard disk storage, and the like) for storing data and/or computer code for completing or facilitating various processes described in the present invention. The main memory 112 may be or include volatile memory or non-volatile memory. The main memory 112 may include database components, object code components, script components, or any other type of information structure in order to support various activities and information structures described in the present invention. According to embodiments, the main memory 112 may be communicatively connected to the main processor 111.

The measurement system 110 may include one or more processors (also referred to as central processing units or CPUs). The one or more processors may be connected to a communication infrastructure or bus. In addition, each of the one or more processors may be a graphics processing unit (GPU). In some examples, a GPU (graphics processing unit) may include a processor that is a specialized electronic circuit designed to process mathematically intensive applications. The GPU may have a parallel structure efficient for parallel processing of large blocks of data such as mathematically intensive data commonly used in computer graphics applications, images, videos, and the like. The measurement system 110 may be a computer system and may be connected to one or more user input/output devices such as a monitor, a keyboard, and a pointing device that communicate with the communication infrastructure through a user input/output interface.

Within the LiDAR system 100, one or a plurality of transceivers 120 may be disposed. When a plurality of transceivers are disposed, laser beams may be irradiated and sensed in different directions with respect to a rotation axis. Here, the different directions may be within a range of 10 degrees to 180 degrees with respect to each other and may be arranged at any one of, for example, 30 degrees, 60 degrees, 90 degrees, 120 degrees, 150 degrees, and 180 degrees, and preferably at an angle of 180 degrees. The plurality of transceivers may have different divergence angles or fields of view. The plurality of transceivers may scan objects at different elevations. The transceiver 120 includes a transmission module 121 and a sensing module 123, and the transmission module 121 transmits a laser beam, and the sensing module 123 senses the laser beam transmitted by the transmission module 121. The transmission module 121 may include a light source array (not shown), and the sensing module 123 may include a receiving optical system (not shown) and a sensor array (not shown). The transmission module 121 may include a processor or control module such as a general-purpose processor, ASIC, or FPGA capable of controlling driving of the light source array and transmission of optical signals, and may also include an internal memory storing code for controlling generation of a laser beam.

The light source array may include a plurality of light sources generating laser beams or optical pulses. The light sources may include light sources such as LDs (laser diodes), edge emitting lasers, vertical-cavity surface emitting lasers (VCSELs), distributed feedback lasers, LEDs (light emitting diodes), and SLDs (super luminescent diodes). However, the present invention is not limited thereto. The sensing module 123 may convert a raw histogram based on signals sensed through the receiving optical system and may include a processor having a matching filter, a peak detection circuit, a SPAD saturation circuit, and a quenching circuit. Such a processor may be implemented as a general-purpose processor, an ASIC (Application Specific Integrated Circuit), one or more FPGA (Field Programmable Gate Arrays), a group of processing components, or another suitable electronic processing component. The sensing module 123 may include a memory (not shown) having one or more devices (for example, RAM, ROM, flash memory, hard disk storage, and the like) for storing internally detected optical signals.

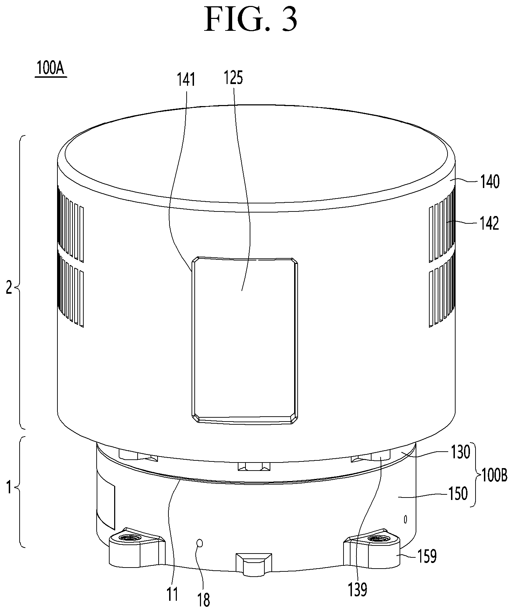

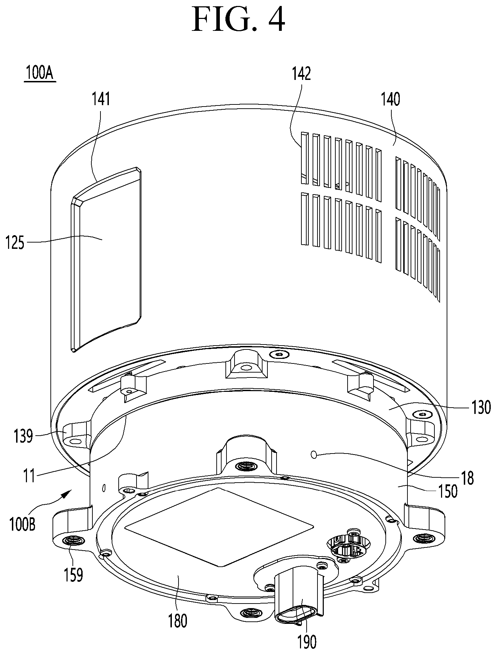

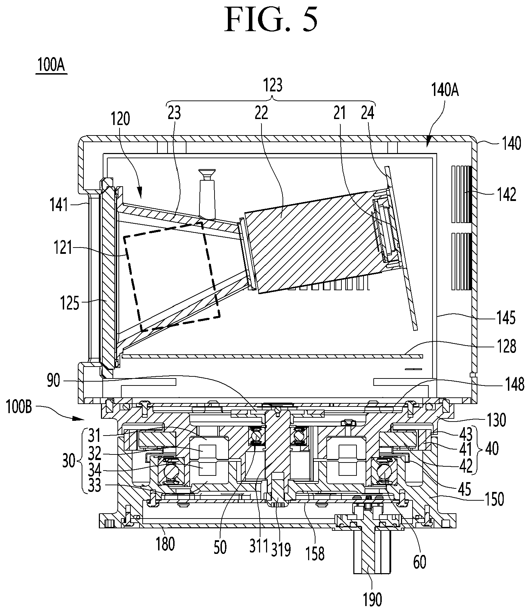

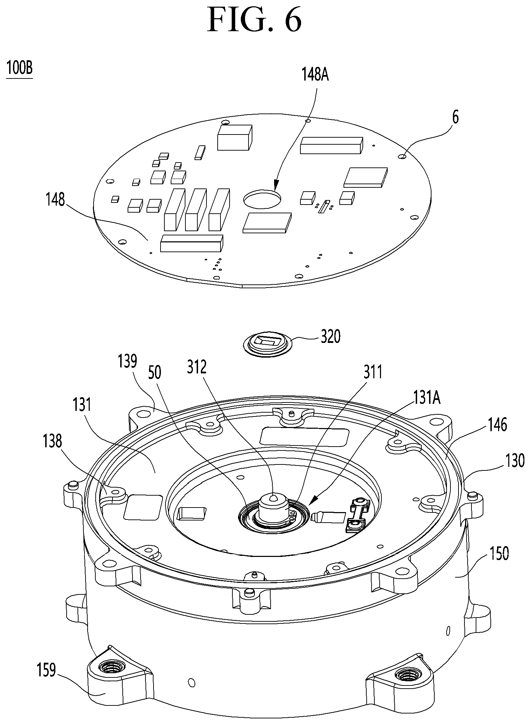

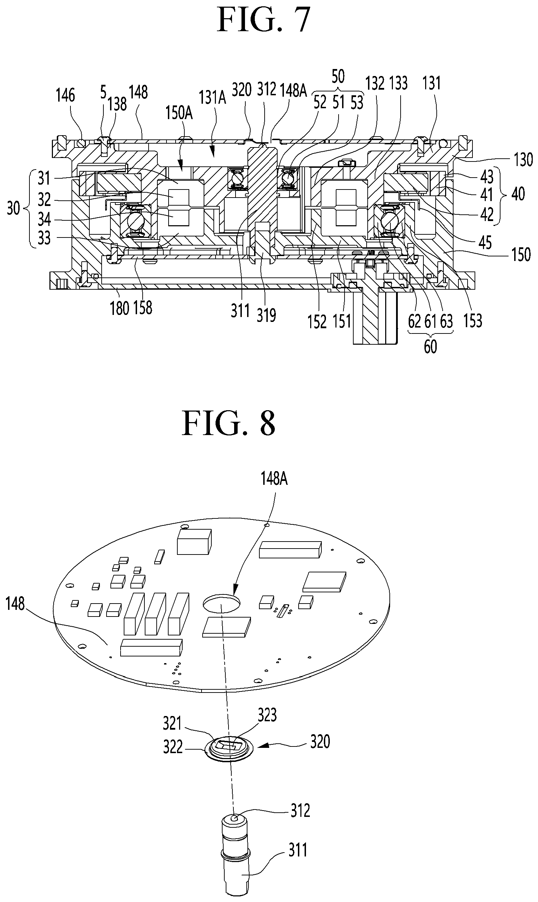

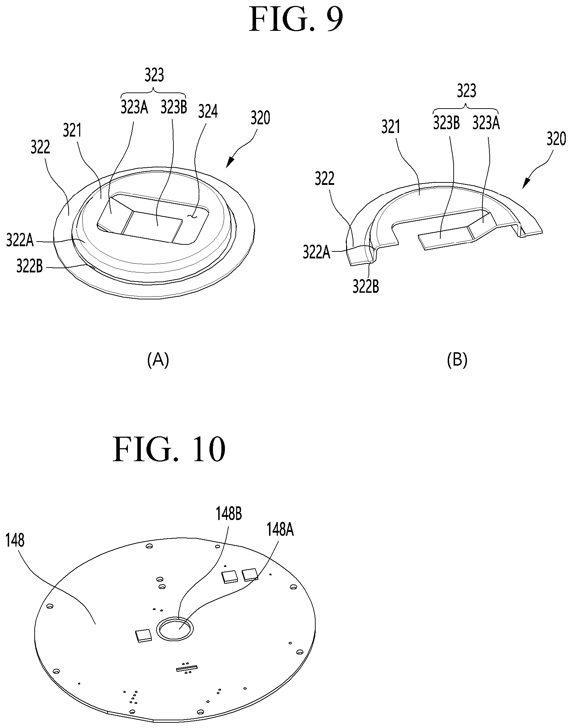

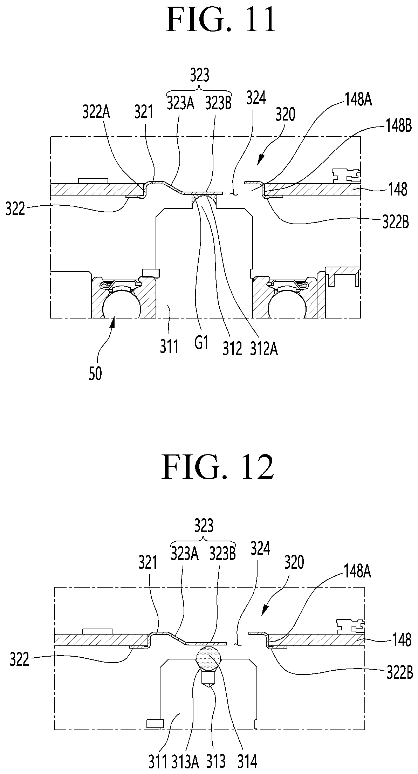

A LiDAR device and a LiDAR driving device having the LiDAR system will be described below with reference to the drawings. FIG. 3 is a perspective view of a LiDAR device according to an embodiment of the present invention, FIG. 4 is a perspective view of the LiDAR device of FIG. 3 viewed from another direction, FIG. 5 is an example of a side cross-sectional view of the LiDAR device of FIG. 3, FIG. 6 is an example of a perspective view of a rotor housing, a contact plate, and a rotating substrate in the LiDAR driving device of FIG. 5, FIG. 7 is a coupled side cross-sectional view of the LiDAR driving device of FIG. 6, FIG. 8 is an exploded perspective view of a center shaft, a contact plate, and a rotating substrate of FIG. 5, FIGS. 9A and 9B are an enlarged view and a side cross-sectional view of the contact plate of FIG. 8, FIG. 10 is a perspective view illustrating a rear surface of the rotating substrate of FIG. 8, and FIG. 11 is an enlarged view for explaining a relationship among the rotating substrate, the contact plate, and the center shaft of FIG. 7.

As shown in FIGS. 3 to 5, the LiDAR device 100A may include a fixed unit 1 and a rotating unit 2 having a cover 140. The fixed unit 1 is coupled to a portion of a movable object such as a vehicle and may be embedded in the movable object or protrude from the movable object. The fixed unit 1 may include a bottom cover 180, a first substrate 158, and a stator housing 150. The stator housing 150 and the bottom cover 180 may be separated from each other or integrally formed, and the stator housing 150 may have a plurality of fastening portions 159 and may be fastened to the movable object by fastening means such as screws.

The rotating unit 2 may rotate on the movable object by driving force of the motor 40. Rotation of the rotating unit 2 may be axial rotation. The rotating unit 2 may include the above-disclosed transceiver 120, a rotatable rotor housing 130, and a second substrate 148. The transceiver 120 may axially rotate together with the rotor housing 130. The second substrate 148 is a rotating substrate electrically connected to the transceiver 120 and may receive wireless power from the fixed unit 1. The rotating unit 2 and the fixed unit 1 may have wireless transmitting/receiving units and may wirelessly transmit/receive data. The second substrate 148 may be disposed on the rotor housing 130 and disposed below the transceiver 120.

The LiDAR driving device 100B may include the stator housing 150, the rotor housing 130, and components coupled to at least one of the stator housing 150 and the rotor housing 130, for example, bearing members 50 and 60, the motor 40, the center shaft 311, and the like.

A protective case 145 protecting the transceiver 120 may be disposed inside the cover 140. A lower portion of the cover 140 is disposed around an upper portion of the fixed unit 1 and covers an upper circumference of the rotating unit 2. The cover 140 has a cylindrical shape with an open lower portion, includes the transceiver 120 therein, and rotates together with the rotating unit 2. The cover 140 is made of an opaque material and may include a metal or non-metal material, covers a circumference of the transceiver 120, and may include an opening 141 for transmission and reception of a laser beam. The opening 141 may be disposed on a transmission/reception path of the transceiver 120. The cover 140 is coupled to the rotor housing 130 and may rotate together with the rotor housing 130. In another example, when the cover 140 is made of a transparent material and coupled to the stator housing 150, the cover 140 may not rotate, and the transceiver 120 may rotate together with the rotor housing 130.

The transceiver 120 includes a transmission module 121 and a sensing module 123, and the transmission module 121 may be disposed at one side of the sensing module 123 or one side of a window 125. The transmission module 121 has a light source array and may be disposed in an area adjacent to the window 125 in order to minimize loss or interference of the laser beam. The sensing module 123 includes a sensor unit 21, a sensor substrate 24, an optical system 22, and a light guide unit 23, and the light guide unit 23 may guide an incident laser beam to the optical system 22, and an incident-side diameter thereof may be larger than an exit-side diameter thereof. That is, the light guide unit 23 may have a funnel shape having a wide inlet and a narrow outlet and may be in close contact with the window 125. The optical system 22 has one or more lenses and focuses the incident laser beam onto the sensor unit 21 by adjusting resolution and refractive power of the laser beam incident through the light guide unit 23, and the sensor unit 21 converts the incident laser beam into an electrical signal. The sensor substrate 24 is electrically connected to the sensor unit 21 and transmits the received signal to a processor and memory within the fixed unit 1 through the third substrate 128 and the second substrate 148. The third substrate 128 and the second substrate 148 may be rotating substrates.

The light guide unit 23 may be provided in an inclined structure together with optical axes of the lenses of the optical system 22. The transceiver 120 is illustrated as including one pair of a transmission module 121 and a sensing module 123, but may include a plurality of transmission modules and a plurality of sensing modules having different fields of view and transmitting/receiving laser beams in opposite directions.

The cover 140 may include a heat dissipation part 142 having a plurality of holes penetrating from an inside to an outside, and the heat dissipation part 142 may dissipate heat generated inside to the outside. The heat dissipation part 142 may be disposed in a plurality of heat dissipation regions on an outer circumference of the cover 140, and a plurality of holes may be arranged in each heat dissipation region. For example, the plurality of heat dissipation regions may be respectively disposed outside the light source unit 121 of the transceiver 120 and outside the sensor unit 21 and the sensor substrate 24. The window 125 is exposed through the opening 141 of the cover 140, and the window 125 may be disposed on a transmission/reception area of the transceiver 120 to transmit the transmitted/received laser beam therethrough. The window 125 may be formed of a transparent material.

A protective case 145 may be provided in an inner region 140A of the cover 140, and the protective case 145 may block moisture or foreign substances from penetrating into or flowing into the inside of the protective case 145 when moisture or foreign substances penetrate from the outside to the inside of the cover 140. Accordingly, the protective case 145 may protect the transceiver 120 and the internal substrates 128 and 148. The cover 140 and the protective case 145 may be fastened to the rotor housing 130 by fastening means. The protective case 145 may have a shape corresponding to an inner shape of the cover 140, for example, a cylindrical shape having a closed upper portion and an open lower portion. The window 125 may be coupled to one side of the protective case 145. At least one or both of the cover 140 and the protective case 145 may be fastened to the rotor housing 130 by fastening means (not shown). An outer upper circumference of the rotor housing 130 may include a cover fastening portion 139, and the cover fastening portion 139 may be coupled to a part of the protective case 145 or another frame through fastening means (not shown). In addition, the cover 140 and the protective case 145 may be coupled to the rotor housing 130. As shown in FIG. 6, an outer upper circumference of the rotor housing 130 may have a concave ring-shaped groove, and a ring-shaped gasket 146 may be coupled to the ring-shaped groove, and the gasket 146 may be in close contact with the rotor housing 130 and the protective case 145 or another frame.

The connector 190 may be coupled to a portion of the bottom cover 180. In another example, the power connector 190 may be coupled to a portion of the stator housing 150. That is, the connector 190 may be coupled to an outer side wall of the stator housing 150. The connector 190 may be connected to the first substrate 158 or another substrate and may provide necessary power or transmit/receive data. An outer circumference of the stator housing 150 may have a cylindrical shape, and an outer circumference of the rotor housing 130 may also have a cylindrical shape. Outer diameters of the stator housing 150 and the rotor housing 130 may be the same, or the outer diameter of the rotor housing 130 may be greater than the outer diameter of the stator housing 150. Here, the outer diameter refers to an outer circumference of an area where the stator housing 150 and the rotor housing 130 correspond to each other. As shown in FIG. 4, an area between the stator housing 150 and the rotor housing 130 may have a gap 11. The gap 11 may be formed along a circumference between the stator housing 150 and the rotor housing 130. An inner or outer portion of the gap 11 may have a stepped structure to prevent inflow of external foreign substances.

A portion of the motor 40 may be disposed inside the gap 11. A portion of the motor 40 may be in close contact with an inner area of the stator housing 150 or the rotor housing 130. Such a portion of the motor 40 may be located inside the gap 11 to block a path through which moisture or foreign substances penetrate from the outside to the inside. In addition, a portion of the motor 40 may be disposed higher than an upper end of the gap 11, thereby increasing an inflow path and suppressing inflow of moisture or foreign substances. The portion of the motor 40 disposed inside the gap 11 may be a yoke or a motor core. The coupling area between the stator housing 150 and the rotor housing 130 of the LiDAR driving device 100B may include the first substrate 158 disposed on the bottom cover 180, the center shaft 311, the wireless power transmission module 30 coupled to the stator housing 150 and the rotor housing 130, the bearing members 50 and 60, and the motor 40.

The center shaft 311 guides axial rotation of the rotor housing 130 at a central portion of the stator housing 150. A lower portion of the center shaft 311 may be fastened to a portion of the stator housing 150 by a fastening means 319. An upper portion of the center shaft 311 may contact or be electrically connected to a component of the second substrate 148. An encoder module (not shown) may be coupled to a coupling area between the stator housing 150 and the rotor housing 130, and the encoder module may detect a rotational direction and position using an encoder disk and an optical sensor. An upper end of the center shaft 311 may protrude onto an inner recess R30 of the rotor housing 130. The second bearing member 50 may be coupled to an upper central hole 131A of the rotor housing 130 and may be connected to the inner recess R30.

As shown in FIGS. 7, 8, 9, and 16, the center shaft 311 may include vertical flat surfaces C1 on both lower sides thereof, and the vertical flat surfaces C1 suppress rotation of the shaft 311 and may be closely coupled to the stator housing 150. The center shaft 311 is disposed on a lower central hole H1 of the stator housing 150 through an upper central hole 131A of the rotor housing 130. A lower circumference of the center shaft 311 is disposed inside a rotation preventing portion P1 of a bottom portion 151 of the stator housing 150, and a part of the rotation preventing portion P1 may be in close contact with the vertical flat surface C1. A bottom support portion P2 is disposed around the lower central hole H1 to support a bottom of the center shaft 311. The rotation preventing portion P1 and the bottom support portion P2 may prevent rotation of the center shaft 311 and may limit downward movement thereof.

In addition, a fastening groove G1 is formed at a lower portion of the center shaft 311, and the fastening means 319 is fastened to the fastening groove G1. Accordingly, the fastening means 319 may fix the bottom support portion P2 and the center shaft 311 through the lower central hole H1 of the stator housing 150. An inner diameter of the central hole H1 of the stator housing 150 may be smaller than an inner diameter of the central hole 131A of the rotor housing 130. Accordingly, insertion of the center shaft 311 is facilitated, and coupling force between the stator housing 150 and the center shaft 311 may be strengthened.

The wireless power transmission module 30 may include first and second ferrite cores 31 and 33 and first and second coils 32 and 34. The motor 40 may include a plurality of driving magnets 41, a motor core 42, and a yoke 43. The wireless power transmission module 30 wirelessly transmits power from the fixed unit 1 to the rotating unit 2. The wireless power transmission module 30 may be coupled inside the stator housing 150 and the rotor housing 130 so as to face each other. The first ferrite core 31 and the first coil 32 function as a wireless power receiving unit, and the second ferrite core 33 and the second coil 34 function as a wireless power transmitting unit. The wireless power transmitting unit 33 and 34 of the wireless power transmission module 30 wirelessly transmits power within the fixed unit 1, and the wireless power receiving unit 31 and 32 wirelessly receives power within the rotating unit 2 and supplies power to respective components within the rotating unit 2. The wireless power transmission module 30 may enable operation of the transceiver 120 and substrates and systems connected thereto. When the motor core 42 rotates, the wireless power transmission module 30 may supply power to the motor core 42. The motor core 42 may be fixed to the rotor housing 130 by fastening means (not shown).

The wireless power transmitting unit 33 and 34 may be coupled within the stator housing 150, and the wireless power receiving unit 31 and 32 may be coupled to the rotor housing 130. The wireless power transmission module 30 may be disposed on an inner circumference among areas of the stator housing 150 and the rotor housing 130 to wirelessly transmit and receive power and may reduce electrical influence on other configurations (for example, a motor) or components.

The LiDAR driving device 100B may include a motor 40 therein for rotation of the rotating unit 2. The motor 40 may include driving magnets having electromagnetic force. A yoke 43 of the motor 40 may be disposed along an outer side of the plurality of magnets 41 and may shield the electromagnetic force. The yoke 43 may function as a back yoke. The yoke 43 and the plurality of magnets 41 may be arranged in a circumferential direction, and the motor core 42 may include a coil and face the plurality of magnets 41. When power is supplied to the coil of the motor core 42, an electromagnetic force may be generated between the magnets 41 and the motor core 42. The motor core 42 may rotate about an axis together with the rotor housing 130, and the yoke 43 and the plurality of magnets 41 may be fixed together with the stator housing 150. In another example, the yoke 43 and the plurality of magnets 41 may be coupled to the rotor housing 130 and rotate therewith, and the motor core 42 may be coupled to the stator housing 150 and fixed in position. The magnets 41 are permanent magnets.

The stator housing 150 is a fixed frame or first housing having a fixed position and may include a metallic material or a non-metallic material. For example, the metallic material may include aluminum or an alloy thereof, and the non-metallic material may include plastic. The rotor housing 130 is a rotating frame or second housing configured to rotate about an axis and may include a metallic material or a non-metallic material. For example, the metallic material may include aluminum or an alloy thereof, and the non-metallic material may include plastic. An inside of an outer wall of the stator housing 150 may include an accommodation region 150A for accommodating components, and the rotor housing 130 may be seated on an inner upper side thereof. In addition, the rotor housing 130 may include an accommodation space in a lower portion thereof corresponding to the accommodation region 150A to accommodate components.

As shown in FIGS. 7 and 8, the stator housing 150 may include a bottom portion 151 extending from an outer wall toward a center shaft 161, a first fixed sidewall 152 protruding from the bottom portion 151 toward the second substrate 148, and a second fixed sidewall 153. The rotor housing 130 may include a first rotating sidewall 132 and a second rotating sidewall 133 extending from a bottom plate 131 toward the bottom cover 180. The first fixed sidewall 152 and the first rotating sidewall 132 may correspond to each other in a vertical direction, and lower portions of the second fixed sidewall 153 and the second rotating sidewall 133 may correspond to each other in a horizontal direction. The first and second fixed sidewalls 152 and 153 may have a ring shape, and the first and second rotating sidewalls 132 and 133 may also have a ring shape. The first fixed sidewall 152 and the first rotating sidewall 132 are inner sidewalls of the respective housings 130 and 150, and the second fixed sidewall 153 and the second rotating sidewall 133 are intermediate sidewalls of the respective housings 130 and 150.

The wireless power receiving unit 31 and 32 may be accommodated in a space between the first and second rotating sidewalls 132 and 133 and may be fixed to an outer circumference of the first rotating sidewall 132 and a lower surface of the bottom plate 131. The wireless power transmitting unit 33 and 34 may be accommodated in a space between the first fixed sidewall 152 and the second rotating sidewall 133 and may be fixed to an outer circumference of the first fixed sidewall 152 and an upper surface of the bottom portion 151.

The motor core 42 may be fixed to an inner circumference of the second rotating sidewall 133 and the lower surface of the bottom plate 131, and the yoke 43 may be fixed on a stepped structure inside an upper portion of the outer wall of the stator housing 150. The plurality of magnets 41 may be attached to an inner surface of the yoke 43 and arranged in a circumferential direction. The magnets 41 may face the motor core 42. An outer side of the yoke 43 may overlap the gap 11 in a horizontal direction. An upper end of the yoke 43 may be disposed higher than an upper end of the gap 11, thereby suppressing inflow of moisture or foreign substances from outside. The stator housing 150 may include discharge ports 18. The discharge ports 18 may be arranged in plurality along an outer circumference of the stator housing 150 and may be spaced apart from one another or arranged equiangularly about a central axis. An outlet of each discharge port 18 may be positioned lower than an inlet thereof. An inlet of each discharge port 18 may be positioned at a corner portion between the bottom portion 151 and the outer wall of the stator housing 150 or at a bottom of an outer accommodation space 150C of the stator housing 150. An outlet of each discharge port 18 may be positioned at a lower outer surface of the stator housing 150. A bottom of the outer accommodation space 150C in which the inlets of the discharge ports 18 are disposed may be horizontal or inclined, and in the inclined structure an outer side of the bottom may be lower than an inner side thereof.

A shielding cover 45 may be disposed below the motor 40. The shielding cover 45 may be disposed outside the second rotating sidewall 133 of the rotor housing 130. The shielding cover 45 may be disposed in an area between the motor 40 and the first bearing member 60. The first bearing member 60 may be disposed on one side or below the motor 40. A portion of the shielding cover 45 may be disposed adjacent to the motor core 42 to block effects caused by electromagnetic force. The shielding cover 45 may be adhered or attached to a lower surface of the motor core 42, cover an entire lower surface of the motor core 42, and extend outward beyond the second fixed sidewall 153 of the stator housing 150.

The shielding cover 45 may include a metallic material, for example, an alloy of nickel and iron (e.g., Permalloy), and may include a magnetic material having very high permeability and low magnetic hysteresis loss. The alloy may contain more nickel than iron. Electromagnetic force generated by the motor 40, that is, leakage magnetic flux, may position bearings of the first bearing member 60 in an abnormal direction, thereby increasing friction within the first bearing member 60 and consequently increasing power consumption. In a LiDAR device, power consumption of a motor having an inertial load during rotation is generated by friction occurring between bearings and raceways (inner races and outer races), and such friction may cause a sharp increase in power consumption in a low-temperature environment. To address this, the shielding cover 45 may cover upper and outer portions of the first bearing member 60 to shield magnetic force acting on the first bearings 61 of the first bearing member 60.

The LiDAR driving device 100B may include one or more outer bearing members coupled in an area between the stator housing 150 and the rotor housing 130, and one or more inner bearing members may be coupled in an area between the rotor housing 130 and the center shaft 311 (i.e., 131A). The first bearing member 60 may be slidably coupled to an inner side of the second fixed sidewall 153 of the stator housing 150, thereby facilitating assembly. The first bearing member 60, as an outer bearing member, may include first bearings 61, a first inner race 62, and a first outer race 63, and a plurality of the first bearings 61 may be disposed between the first inner race 62 and the first outer race 63. The first bearing member 60 may be coupled between the second fixed sidewall 153 disposed outside the first bearing member 60 and the second rotating sidewall 133 disposed inside the first bearing member 60.

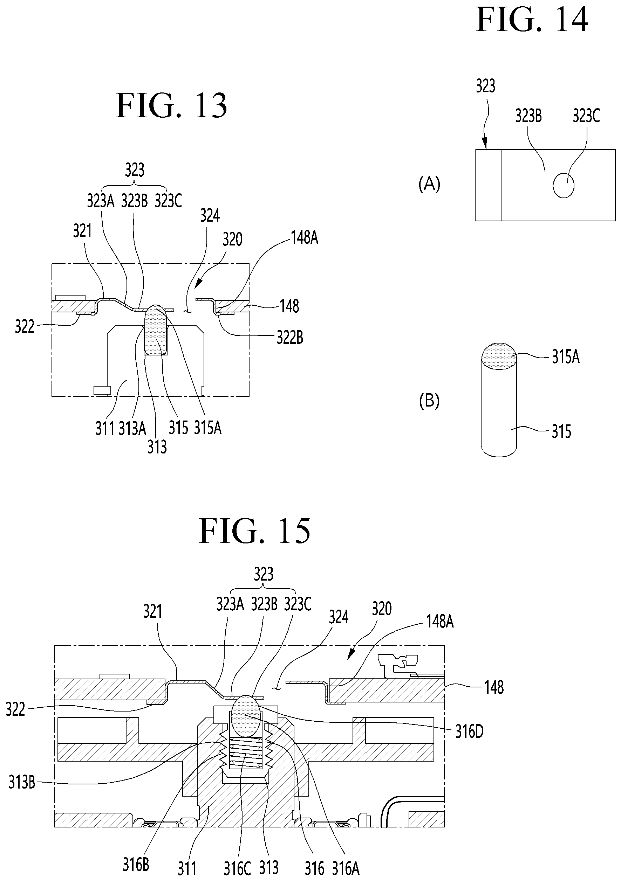

The first bearing member 60 may be disposed on the bottom portion 151 of the stator housing 150, and the first inner race 62 may be disposed between the bottom portion 151 and an upper end of a recess R1 of the second rotating sidewall 133. The first outer race 63 of the first bearing member 60 may be disposed between the bottom portion 151 and inner protrusions 153A of the second fixed sidewall 153 (see FIG. 13). The inner protrusions 153A may be bent inward from an upper end of the second fixed sidewall 153, and a plurality thereof may be arranged at regular intervals. Each of the plurality of inner protrusions 153A may be disposed in an area corresponding to each of the plurality of first bearings 61, thereby suppressing upward movement of the first bearing member 60 caused by the respective first bearings 61.

The width of the first bearing member 60 (difference between inner diameter and outer diameter) may be greater than the width of the second bearing member 50 (difference between inner diameter and outer diameter). The inner diameter of the first bearing member 60 may be greater than the outer diameter of the wireless power transmission module 30 and smaller than the inner diameter of the magnets 41. The inner diameter of the first bearing member 60 may be greater than the outer diameter of the second bearing member 50, for example, at least twice as large, thereby supporting and distributing a load or weight transmitted downward through the rotating unit 1 having the transceiver (see FIG. 3).

The second bearing member 50 is an inner bearing member and may include second bearings 51, a second inner race 52, and a second outer race 53. A plurality of the second bearings 51 may be disposed between the second inner race 52 and the second outer race 53. The second bearing member 50 may be coupled between the first rotating sidewall 132 disposed outside the second bearing member 50 and the center shaft 311 disposed inside the second bearing member 50.

A horizontal position of the second bearing member 50 with respect to the center shaft 311 may be disposed above the first bearing member 60. An area 150B between the center shaft 311 and the first fixed sidewall 152 and the first rotating sidewall 132 may be spaced apart by the outer diameter of the second bearing member 50. One or more bearing members may be disposed in the area between the center shaft 311 and the first fixed sidewall 152 and the first rotating sidewall 132. For example, one or more second bearing members 50 may be disposed at an upper portion or upper and lower portions outside the center shaft 311. At least one or all of the first and second bearing members 60 and 50 may include a conductive lubricant therein, for example, conductive grease, and the conductive grease may electrically connect the inner races 62 and 52 and the outer races 63 and 53 within the first and second bearing members 60 and 50.

A communication unit (an optical signal transmitting/receiving unit) for data communication and/or a wireless power transmission module may be provided between the stator housing 150 and the rotor housing 130, that is, between the fixed unit 1 (see FIG. 3) and the rotating unit 2 (see FIG. 3). Here, the first substrate 158 may be electrically connected to a first communication unit for transmitting and receiving optical signals, and the second substrate 148 may be electrically connected to a second communication unit having a transmitter and a receiver communicating with the first communication unit. When the first and second communication units communicate wirelessly using optical signals, stable wireless communication may be difficult if interference caused by external magnetic force is significant, and errors in data communication may reduce reliability of system operation. To reduce such data communication errors, a contact resistance (or conduction resistance) between the first substrate 158 and the second substrate 148 is required to be 500 ohms or less. When the rotating unit 2 (see FIG. 3) is stopped or rotates at a low speed (e.g., less than 200 rpm) on the fixed unit 1 (see FIG. 3), the contact resistance between the first and second substrates 158 and 148 may be maintained at 500 ohms or less. However, when the rotating unit 2 rotates at a high speed (e.g., 200 rpm or more), the contact resistance between the first and second substrates 158 and 148 may increase to more than 500 ohms. Because such an increase in contact resistance causes errors in wireless data communication, the resistance between the two substrates 148 and 158 is required to be 500 ohms or less. When the contact resistance increases due to rotation of the rotating unit 2, a lubricant such as grease sealed inside a ball bearing member may have conductive properties; however, when used for a long period of time, the carbon-containing grease may increase wear of raceways (inner races and outer races) and shorten the service life of the bearing member.

As shown in FIG. 7, the center shaft 311 is formed of a metallic material and may be electrically connected to the second substrate 148. A contact plate 320 is disposed between the center shaft 311 and the second substrate 148, which is a rotating substrate. The contact plate 320 includes a conductive material, for example, a metallic material. The second substrate 148 may be electrically connected to the first substrate 159 through the center shaft 311 and the contact plate 320. The contact plate 320 may have a circular or polygonal shape in a top view. A contact protrusion 312 is disposed between the center shaft 311 and the contact plate 320. The contact protrusion 312 may have a pin shape or a ball shape formed of a conductive material and may electrically connect the center shaft 311 and the contact plate 320. The contact protrusion 312 may be integrally formed at an upper end of the center shaft 311 or separately coupled to an upper portion of the center shaft 311.

As shown in FIGS. 6, 8, and 10, the second substrate 148 may include a coupling hole 148A at a center thereof, and various components, for example, passive components and/or active components, may be mounted on an upper surface or front surface thereof. The second substrate 148 may include fastening holes 6 respectively fastened to fastening portions 138 of the rotor housing 130 by a plurality of fastening means 5. As shown in FIG. 6, the fastening portions 138 may be disposed at positions corresponding to the fastening holes 6 along an outer upper circumference of the rotor housing 130. A diameter or maximum width of the coupling hole 148A of the second substrate 148 may be greater than a diameter of the center shaft 311. A conductive layer 148B is formed on an inner circumferential surface of the coupling hole 148A. The conductive layer 148B may include a plated layer formed of copper or gold and may extend along the inner circumferential surface and a lower surface perimeter of the coupling hole 148A. The conductive layer 148B may improve electrical conductivity between the second substrate 148 and the contact plate 320. The coupling hole 148A may have a circular or polygonal shape in a top view.

As shown in FIGS. 8 to 11, the contact plate 320 may include a body 321, a fixing portion 322 extending from the body 321 along a lower surface perimeter of the coupling hole 148A of the second substrate 148, and a contact portion 323 having an elastic piece 323A and a contact piece 323B extending toward an inner hole 324 of the body 321. The contact plate 320 may have a thickness of 0.5 mm or less, for example, in a range of 0.2 mm to 0.5 mm. The contact plate 320 may be formed of stainless steel or copper.

The fixing portion 322 of the contact plate 320 extends along the lower surface perimeter of the coupling hole 148A of the second substrate 148 and is bonded to the conductive layer 148B disposed along the lower surface perimeter of the second substrate 148, thereby electrically connecting the contact plate 320 and the second substrate 148. An outer surface 322A of the body 321 of the contact plate 320 is bent between the fixing portion 322 and an upper surface of the body to provide a vertical side surface and may contact the conductive layer 148B on the inner circumferential surface of the coupling hole 148A. Accordingly, the outer surface 322A of the contact plate 320 may contact the conductive layer 148B of the coupling hole 148A on different surfaces (the inner circumferential surface and the lower surface) and may be electrically connected thereto. A height of the outer surface 322A may be equal to a thickness of the second substrate 148 or not greater than twice the thickness of the second substrate 148 in order to provide elasticity to the contact portion 323.

A plating layer (not shown) may be formed on at least one of an upper surface and a lower surface of the body 321 of the contact plate 320. The plating layer formed on the surface of the body 321 may be formed as a single layer or multiple layers and may include at least one of nickel, tin, and copper. Preferably, a plating layer may be formed on the outer surface 322A of the body 321 and an upper surface of the fixing portion 322. The fixing portion 322 of the contact plate 320 and the conductive layer 148B of the second substrate 148 may be joined by a conductive bonding member (not shown), for example, soldering. In addition, the outer surface 322A of the contact plate 320 and the conductive layer 148B disposed around the coupling hole 148A of the second substrate 148 may be joined by a conductive bonding member (not shown), for example, soldering. Here, a concave groove 322B may be provided at a bent portion between the outer surface 322A and the fixing portion 322 of the contact plate 320 to prevent a reduction in rigidity of the fixing portion 322. In addition, a bonding material such as solder may flow into the groove 322B.

The inner hole 324 of the contact plate 320 may be formed by a partial punching process of the contact portion 323 and may have a polygonal shape or a curved shape. The contact portion 323 may extend toward a center of the inner hole 324. The elastic piece 323A may be bent obliquely from the body 321 toward the center shaft 311, and the contact piece 323B may extend horizontally from the elastic piece 323A. The elastic piece 323A may be bent obliquely to provide elasticity, or may be bent one or more times between the body 321 and the contact piece 323B. A lower surface of the contact piece 323B faces an upper surface of the center shaft 311 and may correspond to the contact protrusion 312. The contact protrusion 312 protrudes in a hemispherical shape, and an upper end 312A thereof has a convex curved surface that may contact a flat lower surface or a concave curved surface of the contact piece 323B. The contact piece 323B of the contact portion 323 may contact or be electrically connected to the upper end 312A of the contact protrusion 312. A conductive lubricant, for example, grease, may be applied to a contact point and surrounding area between the contact piece 323B and the contact protrusion 312. The conductive lubricant may reduce noise and wear generated between the contact piece 323B and the contact protrusion 312 and may improve conductivity.

A diameter of the contact plate 320 may be greater than a diameter of the coupling hole 148A of the second substrate 148. The contact plate 320 rotates together with the second substrate 148 on the center shaft 311, and the contact piece 323B and the contact protrusion 312 remain electrically connected during rotation. In other words, the contact plate 320 and the contact protrusion 312 are maintained in continuous contact. Even when the rotating unit rotates at a low speed or a high speed (i.e., a maximum speed), the contact resistance between the first and second substrates 158 and 148 may be maintained at 500 ohms or less. In addition, conductivity dependence on grease within the bearing member may be reduced, or the grease material (excluding carbon-based materials) may be changed, so that the service life of the bearing member is not adversely affected even after long-term use.

FIG. 12 illustrates a first modified example of a member contacting the contact plate of FIG. 11.

As shown in FIG. 12, a contact protrusion 314 is disposed between the contact plate 320 and the center shaft 311. The contact protrusion 314 has a spherical shape and is disposed in a concave recess 313 formed in an upper portion of the center shaft 311. The recess 313 has a circular shape in a top view with a narrower lower portion and a wider upper portion. A lower portion of the contact protrusion 314 is inserted into an upper portion 313A of the recess 313 and may contact a surface of the upper portion 313A. The contact protrusion 314 is formed of a metallic material and may be electrically connected to the center shaft 311 and the contact piece 323B of the contact plate 320. A diameter of the contact protrusion 314 may be greater than a gap between the upper surface of the center shaft 311 and the contact piece 323B. Accordingly, the conductive ball 314 receives a predetermined elastic pressure from the contact piece 323B and electrically connects the center shaft 311 and the contact plate 320.

FIG. 13 illustrates a second modified example of a member contacting the contact plate of FIG. 11, and FIGS. 14A and 14B illustrate a shape of the contact plate and a shape of the contact protrusion shown in FIG. 13. As shown in FIGS. 13 and 14, an insertion hole 323C is provided in the contact piece 323B of the contact plate 320, and an upper portion 315A of a contact protrusion 315 is disposed in the insertion hole 323C. The contact protrusion 315 has a columnar shape such as a pin and includes a convex curved upper portion 315A. An upper recess 313 of the center shaft 311 has a depth into which the contact protrusion 315 is inserted, and an upper portion 313A thereof has a diameter greater than that of a lower portion. The contact protrusion 315 is separately coupled to the center shaft 311, and a height thereof may be greater than a depth of the recess 313. The contact protrusion 315 is inserted into and supported by the upper recess 313, and the upper portion 315A thereof may be partially inserted into and coupled to the insertion hole 323C. That is, a diameter of the insertion hole 323C is smaller than a lower diameter of the contact protrusion 315 and greater than an upper-end diameter thereof. Accordingly, when the upper portion 315A of the contact protrusion 315 is inserted into the insertion hole 323C and the contact plate 320 rotates together with the second substrate 148, the contact protrusion 315 may maintain electrical contact with the contact plate 320 and the center shaft 311. A conductive lubricant may be applied to a contact region between the contact protrusion 315 and the contact piece 323B.

FIG. 15 illustrates a third modified example of a member contacting the contact plate of FIG. 11.

As shown in FIG. 15, the contact plate 320 may have a shape or structure similar to that shown in FIG. 11 or FIG. 12. A concave recess 313 is disposed at an upper center of the center shaft 311, and a protrusion guide portion 316 is provided in the recess 313. The protrusion guide portion 316 includes an elastic spring 313C therein, a fastening structure 316B on an outer side thereof, and a protrusion hole 316D on an upper side thereof. The protrusion guide portion 316 may have a fastening structure 316B such as a screw thread and may be fastened within a fastening structure 313B of the recess 313. Accordingly, the protrusion guide portion 316 formed of a conductive material and the center shaft 311 may be electrically connected. When a contact protrusion 316A is inserted therein, the elastic spring 313C provides an elastic restoring force to push the contact protrusion 316A upward. A portion of the contact protrusion 316A protrudes through the protrusion hole 316D, thereby preventing upward separation thereof. In other words, a diameter of the contact protrusion 316A may be greater than a diameter of the protrusion hole 316D, and the contact protrusion 316A may contact a surface of the protrusion hole 316D and a surface of the contact plate 320. The contact protrusion 316A may be partially inserted into the insertion hole 323C of the contact piece 323B so that the contact protrusion 316A and the contact piece 323B are electrically connected. Alternatively, the contact piece 323B may have a flat surface without an insertion hole, and the contact protrusion 316A may contact the flat surface. A conductive lubricant may be applied to a contact region between the contact protrusion and the contact piece 323B.

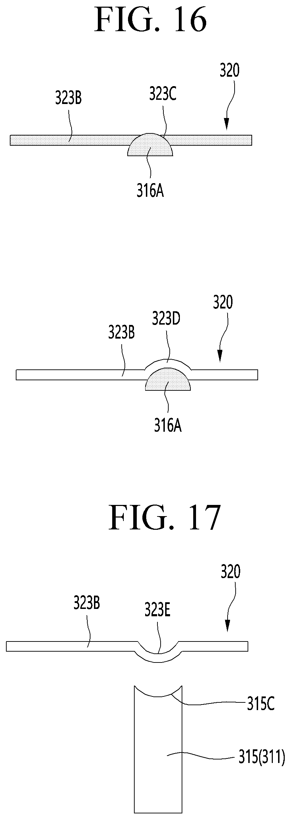

As shown in FIG. 16A, an upper portion 316A of the contact protrusion may be partially inserted into the insertion hole 323C of the contact piece 323B of the contact plate 320 so that the contact protrusion and the contact piece 323B contact each other. As shown in FIG. 16B, a concave hemispherical groove 323D may be provided in the contact piece 323B, and the upper portion 316A of the contact protrusion may be closely adhered to the groove 323D. A conductive lubricant may be applied to a contact region between the contact protrusion and the contact piece 323B. As shown in FIG. 17, the contact piece 323B of the contact plate 320 includes a convex hemispherical protrusion 323E, and an upper portion of the contact protrusion 315 includes a concave hemispherical groove 315C. The hemispherical protrusion 323E may be closely adhered to the hemispherical groove 315C. A conductive lubricant may be applied to a contact region between the hemispherical protrusion 323E and the hemispherical groove 315C.

According to the present invention, the elastic piece 323A having a stepped or inclined structure at a central portion of the contact plate 320 applies a predetermined pressure toward the center shaft 311, thereby maintaining contact between the contact protrusion and the contact piece even when the rotor housing rotates or external vibration and impact are transmitted. In addition, a non-conductive lubricant or a conductive lubricant may be applied to the contact region between the contact protrusion and the contact piece to reduce noise and wear caused by rotational friction and to prevent deterioration in conductivity. Further, because the contact plate 320 is electrically connected to the second substrate 148, which is a rotating substrate, by a joining member such as solder, the second substrate 148 and the first substrate 158 remain electrically connected at all times. Accordingly, an increase in electrical contact resistance or rotating boundary resistance between the two substrates may be prevented. The rotating boundary resistance refers to resistance at a boundary between the rotating unit and the fixed unit and may correspond to the contact resistance described above.

The contact resistance according to the configuration of the invention is measured to be 500 ohms or less under varying temperature conditions, as described below.

**[Table 1]**

| Temperature (°C) | Rotating Boundary Resistance (Spec. 500Ω Max.) | Result |
|---|---|---|
| 25°C | 1.1 Ω | Pass |
| -20°C (2 hours) | 1.9 Ω | Pass |
| 65°C (2 hours) | 1.0 Ω | Pass |

While the present invention has been described above with reference to exemplary embodiments, those skilled in the art will appreciate that various modifications and changes may be made without departing from the technical spirit and scope of the present invention. Accordingly, the scope of protection of the present invention should not be construed as being limited to the embodiments described herein, but should be determined by the appended claims and their equivalents.

## Claims

1. A LiDAR driving device comprising:
a stator housing;
a center shaft coupled to a central portion of the stator housing;
a rotor housing;
a motor coupled between the stator housing and the rotor housing;
a first substrate disposed within the stator housing and electrically connected to the center shaft;
a second substrate disposed on the rotor housing; and
a contact plate electrically connecting the second substrate and the center shaft.

2. The LiDAR driving device of claim 1,
wherein the second substrate includes a coupling hole at a center thereof,
wherein the contact plate includes: a fixed portion fixed around the coupling hole of the second substrate; and a contact portion which has an elastic piece bent toward the center shaft and a contact piece extending from the elastic piece onto the center shaft.

3. The LiDAR driving device of claim 2,
wherein the center shaft includes a conductive contact protrusion contacting the contact piece.

4. The LiDAR driving device of claim 3,
wherein the contact protrusion protrudes convexly in a hemispherical shape from an upper center of the center shaft, and
wherein the contact protrusion has a ball shape and is seated on a concave recess formed on an upper portion of the center shaft.

5. The LiDAR driving device of claim 3,
wherein the center shaft includes a concave recess at an upper portion thereof,
wherein the contact protrusion includes a pin-shaped lower portion and a hemispherical upper portion,
wherein the pin-shaped lower portion of the contact protrusion is inserted into the recess, and
wherein the hemispherical upper portion of the contact protrusion contacts the contact piece.

6. The LiDAR driving device of claim 5,
wherein the contact piece has a convex groove or an insertion hole smaller than a diameter of the contact protrusion, and contacts the upper portion of the contact protrusion.

7. The LiDAR driving device of claim 3,
wherein the center shaft includes a protrusion guide portion coupled with an elastic spring in an upper recess thereof, and
wherein the contact protrusion is coupled within the protrusion guide portion and contacts the contact piece.

8. The LiDAR driving device of any one of claims 2 to 7,
further comprising:
a first conductive layer around the coupling hole and around a lower surface of the second substrate; and
a second conductive layer on a surface of the contact plate.

9. The LiDAR driving device of any one of claims 2 to 7,
wherein a diameter of the coupling hole is smaller than a diameter of the center shaft and smaller than a diameter of the contact plate.

10. The LiDAR driving device of any one of claims 1 to 7,
further comprising a plurality of bearing members respectively disposed in a region between the stator housing and the rotor housing and a region between the rotor housing and the center shaft.

11. A LiDAR device comprising:
a transceiver configured to transmit and receive a laser beam;
a stator housing supporting the transceiver;
a center shaft coupled to a central portion of the stator housing;
a rotor housing rotating together with the transceiver about the center shaft;
a motor coupled between the stator housing and the rotor housing;
a first bearing member coupled between the stator housing and the rotor housing;
a second bearing member coupled between the center shaft and the rotor housing;
a first substrate disposed within the stator housing and electrically connected to the center shaft;
a second substrate disposed on the rotor housing and electrically connected to the transceiver; and
a contact plate fixed to the second substrate and electrically connecting the second substrate and the center shaft,
wherein a contact resistance between the first substrate and the second substrate is 500 ohms or less.

12. The LiDAR device of claim 11,
wherein the second substrate includes a coupling hole at a center thereof,
wherein the contact plate includes a fixed portion fixed around the coupling hole of the second substrate, and a contact portion having an elastic piece bent toward the center shaft and a contact piece extending from the elastic piece onto the center shaft, and
wherein the center shaft includes a conductive contact protrusion contacting the contact piece.

13. The LiDAR device of claim 12,
wherein the contact protrusion protrudes convexly in a hemispherical shape from an upper center of the center shaft, and
wherein the contact protrusion has a ball shape and is seated on a concave recess formed on an upper portion of the center shaft.

14. The LiDAR device of claim 12,
wherein the center shaft includes a concave recess at an upper portion thereof,
wherein the contact protrusion includes a pin-shaped lower portion and a hemispherical upper portion,
wherein the pin-shaped lower portion of the contact protrusion is inserted into the recess,
wherein the hemispherical upper portion of the contact protrusion contacts the contact piece, and
wherein the contact piece has a convex groove or an insertion hole smaller than a diameter of the contact protrusion and contacts the upper portion of the contact protrusion.

15. The LiDAR device of claim 12,
wherein the center shaft includes a protrusion guide portion coupled with an elastic spring in an upper recess thereof, and
wherein the contact protrusion is coupled within the protrusion guide portion and contacts the contact piece.
